# EUROPÄISCHE PATENTSCHRIFT

(11) **EP 2 996 914 B1**
(45) Veröffentlichungstag und Bekanntmachung des Hinweises auf die Patenterteilung: **26.04.2017**
(21) Anmeldenummer: 14725385.0
(22) Anmeldetag: 05.05.2014
(51) Int. Cl.: B60T 13/66, B60T 17/22

(54) **STEUERVORRICHTUNG FÜR ZUMINDEST EINE ELEKTRISCHE PARKBREMSE EINES BREMSSYSTEMS EINES FAHRZEUGS UND VERFAHREN ZUM BETREIBEN EINES BREMSSYSTEMS EINES FAHRZEUGS MIT EINEM BREMSKRAFTVERSTÄRKER UND EINER ELEKTRISCHEN PARKBREMSE**
CONTROL DEVICE FOR AT LEAST ONE ELECTRICAL PARKING BRAKE OF A BRAKING SYSTEM FOR A VEHICLE AND METHOD FOR OPERATING A BRAKING SYSTEM FOR A VEHICLE HAVING A BRAKE BOOSTER AND AN ELECTRICAL PARKING BRAKE
DISPOSITIF DE COMMANDE POUR AU MOINS UN FREIN DE STATIONNEMENT D'UN SYSTÈME DE FREINAGE D'UN VÉHICULE ET PROCÉDÉ POUR FAIRE FONCTIONNER UN SYSTÈME DE FREINAGE D'UN VÉHICULE COMPRENANT UN AMPLIFICATEUR DE FORCE DE FREINAGE ET UN FREIN DE STATIONNEMENT ÉLECTRIQUE

(30) Priorität: 13.05.2013 DE 102013208671
(43) Veröffentlichungstag der Anmeldung: 23.03.2016
(73) Patentinhaber: Robert Bosch GmbH, 70442 Stuttgart (DE)
(72) Erfinder: HEYER, Klaus, 71691 Freiberg (DE); FOITZIK, Bertram, 74360 Ilsfeld (DE); BUSSMANN, Otmar, 74232 Abstatt (DE); KISTNER, Matthias, 74626 Bretzfeld (DE)
(86) Internationale Anmeldenummer: PCT/EP2014/059093
(87) Internationale Veröffentlichungsnummer: WO 2014/184029

(56) Entgegenhaltungen:
- EP-A1- 1 172 272
- DE-A1-102006 048 910
- DE-A1-102008 024 019
- DE-A1-102011 088 938
- DE-A1-102011 110 892

## Beschreibung

Die Erfindung betrifft eine Steuervorrichtung für zumindest eine elektrische Parkbremse eines Bremssystems eines Fahrzeugs. Ebenso betrifft die Erfindung eine elektrische Parkbremse für ein Bremssystem eines Fahrzeugs und ein Bremssystem für ein Fahrzeug. Des Weiteren betrifft die Erfindung ein Verfahren zum Betreiben eines Bremssystems eines Fahrzeugs mit einem Bremskraftverstärker und einer elektrischen Parkbremse.

### Stand der Technik

In der DE 10 2009 026 973 A1 sind eine Bremsanlage für ein Kraftfahrzeug und ein Verfahren zu ihrer Steuerung beschrieben. Die Bremsanlage umfasst ein hydraulisches Betriebsbremssystem mit einem Hauptbremszylinder und mehreren an dem Hauptbremszylinder angebundenen Radbremsen und ein elektromechanisches Betriebsbremssystem mit elektromechanischen Bremsen. Außerdem weist die Bremsanlage noch einen an dem Hauptbremszylinder angeordneten mechanischen Bremskraftverstärker auf. Bei einem Ausfall des hydraulischen Betriebsbremssystems soll ein Abbremsen eines mit der Bremsanlage ausgestatteten Fahrzeugs noch mit dem elektromechanischen Betriebsbremssystem möglich sein. Gleichzeitig soll mittels des elektromechanischen Bremskraftverstärkers eine einer Bremspedalbetätigung entgegen wirkende Kraft so erzeugbar sein, dass ein Fahrzeugführer beim Niedertreten des Bremspedals noch einen Widerstand spürt. Auf diese Weise soll insbesondere eine Leckage im hydraulischen Betriebsbremssystem für den Fahrzeugführer nicht wahrnehmbar sein.

Außerdem beschreibt die EP 1 172 272 A1 eine Bremsanlage für ein Kraftfahrzeug, sowie ein Verfahren zu ihrer Steuerung. Bei einem Ausfall einer Fremdkraftquelle der Bremsanlage generiert eine Steuereinheit ein elektrisches Ansteuersignals für zumindest einen Aktuator, welcher an zumindest eine Radbremse gekoppelt ist. Auf diese Weise soll trotz des Ausfalls der Fremdkraftquelle eine Umsetzung eines von einem Fahrer eingeleiteten Bremsbetätigungswunsches noch möglich sein.

### Offenbarung der Erfindung

Die Erfindung schafft eine Steuervorrichtung für zumindest eine elektrische Parkbremse eines Bremssystems eines Fahrzeugs mit den Merkmalen des Anspruchs 1, eine elektrische Parkbremse für ein Bremssystem mit den Merkmalen des Anspruchs 2, ein Bremssystem für ein Fahrzeug mit den Merkmalen des Anspruchs 5 und ein Verfahren zum Betreiben eines Bremssystems eines Fahrzeugs mit einem Bremskraftverstärker und einer elektrischen Parkbremse mit den Merkmalen des Anspruchs 7.

### Vorteile der Erfindung

Mittels der vorliegenden Erfindung kann ein Fahrer eines Fahrzeugs auch bei einem Vorliegen des an dem Fahrzeug angebrachten Bremskraftverstärker in mindestens einem funktionseingeschränkten oder funktionsunfähigen Zustand durch ein gezieltes Einsetzen der elektrischen Parkbremse beim Abbremsen des Fahrzeugs kraftmäßig entlastet werden. Insbesondere in einer Situation, in welchem der Fahrer trotz des Vorliegens des Bremskraftverstärkers in dem mindestens einen funktionseingeschränkten oder funktionsunfähigen Zustand ein starkes und schnelles Abbremsen seines Fahrzeugs anfordert, kann die elektrische Parkbremse auf erfindungsgemäße Weise so eingesetzt werden, dass der angeforderte Abbremsvorgang mit keinem signifikanten Kraftaufwand für den Fahrer verbunden ist. Die vorliegende Erfindung gewährleistet somit dem Fahrer einen verbesserten Bremskomfort, welcher selbst bei einem Totalausfall des Bremskraftverstärkers noch gewährleistet ist.

Moderne Fahrzeuge weisen in den meisten Fällen Bremskraftverstärker auf. Somit kann die vorliegende Erfindung für eine Vielzahl von Fahrzeugen genutzt werden.

Die vorliegende Erfindung kann insbesondere auch dazu genutzt werden, selbst bei einem Totalausfall der Bremskraftverstärkung eines hydraulischen Bremssystems die gesetzlichen Anforderungen für die zu erzielende Bremswirkung noch zu gewährleisten. Auch in Extremfällen, d.h. bei einer nachteiligen Auslegung der Hydraulik des Bremssystems, ist dieser Vorteil gewährleistbar.

Die oben aufgezählten Vorteile sind auch bei einer elektrischen Parkbremse für ein Bremssystems eines Fahrzeugs mit einer derartigen Steuervorrichtung gewährleistet.

In einer vorteilhaften Ausführungsform ist die elektrische Parkbremse als autoelektrischer Parkbremssattel ausgebildet. Beispielsweise kann die elektrische Parkbremse einen Stift umfassen, welcher derart auf einen Bremsbelag drückbar ist, dass das dem festgelegten Soll-Bremsmoment entsprechende Ist-Bremsmoment auf ein zugeordnetes Rad ausübbar ist. Somit kann ein kostengünstiger Typ der elektrischen Parkbremse erfolgreich zum Realisieren der vorliegenden Erfindung eingesetzt werden.

Auch ein Bremssystem für ein Fahrzeug mit einer elektrische Parkbremse, einem Bremskraftverstärker und einer entsprechenden Steuervorrichtung bewirkt die oben beschriebenen Vorteile.

Vorzugsweise ist die elektrische Parkbremse als autoelektrischer Parkbremssattel ausgebildet. Somit kann das Bremssystem mit einer kostengünstigen elektrischen Parkbremse ausgestattet werden.

Des Weiteren sind die oben beschriebenen Vorteile realisierbar durch ein Ausführen des Verfahrens zum Betreiben eines Bremssystems eines Fahrzeugs mit einem Bremskraftverstärker und einer elektrischen Parkbremse. Das Verfahren ist entsprechend der oben beschriebenen Ausführungsformen weiterbildbar.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Steuervorrichtung; und
- Fig. 2: ein Flussdiagramm zum Erläutern einer Ausführungsform des Verfahrens zum Betreiben eines Bremssystems eines Fahrzeugs mit einem Bremskraftverstärker und einer elektrischen Parkbremse.

### Ausführungsformen der Erfindung

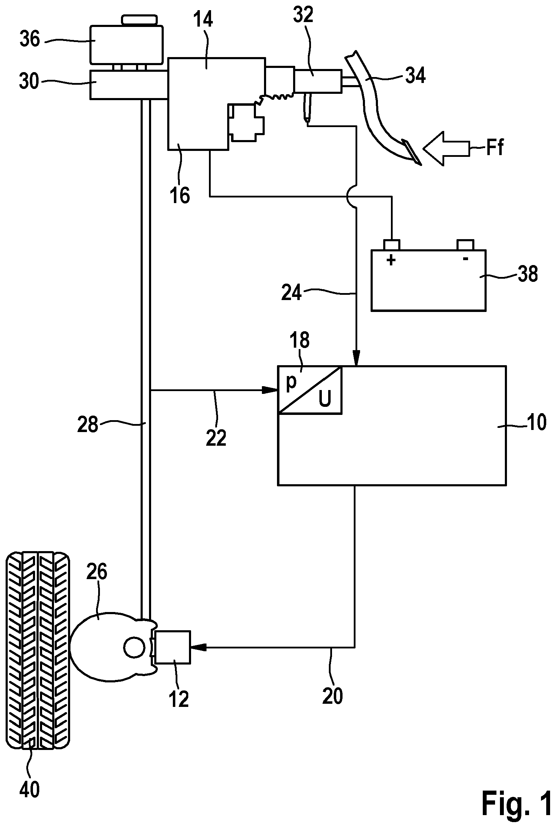

Fig. 1 zeigt eine schematische Darstellung einer Ausführungsform der Steuervorrichtung.

Die in Fig. 1 schematisch dargestellte Steuervorrichtung 10 ist in einem Bremssystem eines Fahrzeugs einsetzbar. Insbesondere kann die Steuervorrichtung 10 in einem Bremssystem eines Fahrzeugs mit einer elektrischen Parkbremse 12 und einem Bremskraftverstärker 14 vorteilhaft eingesetzt werden. Mittels der Steuervorrichtung 10 kann zumindest die elektrische Parkbremse 12 des Bremssystems angesteuert werden. Es wird jedoch darauf hingewiesen, dass die im Weiteren beschriebene Steuervorrichtung 10 auch so weiterbildbar ist, dass mittels der Steuervorrichtung 10 auch zusätzlich zu der elektrischen Parkbremse 12 weitere Komponenten des Bremssystems ansteuerbar sind.

Die elektrische Parkbremse 12 ist vorzugsweise zum Einwirken auf eine Vorderachse des Fahrzeugs ausgelegt. Als Alternative dazu kann die elektrische Parkbremse 12 jedoch auch an einer Hinterachse des Fahrzeugs oder an beiden Achsen des Fahrzeugs einsetzbar sein.

Die Steuervorrichtung 10 kann getrennt von einem Steuergerät 16 des Bremskraftverstärkers 14 ausgebildet sein. Insbesondere kann die Steuervorrichtung 10 in die elektrische Parkbremse 12 integriert sein. Als Alternative dazu kann die Steuervorrichtung 10 jedoch auch in eine Steuerelektronik des gesamten Bremssystems integriert sein. Auch auf diese Weise kann ein Bauraumbedarf des mit der Steuervorrichtung 10 ausgestatteten Bremssystems reduziert werden.

Die Steuervorrichtung 10 weist eine Ansteuereinrichtung 18 auf, mittels welcher eine Soll-Größe bezüglich eines mittels der elektrischen Parkbremse 12 aufzubringenden Soll-Bremsmoment festlegbar ist. Anschließend ist ein der festgelegten Soll-Größe entsprechendes Ansteuersignal 20 an die elektrische Parkbremse 12 ausgebbar. Mittels des Ansteuersignals 20 kann die elektrische Parkbremse 12 in einem aktuell bevorzugten Betriebsmodus steuerbar sein.

Die Ansteuereinrichtung 18 ist zusätzlich dazu ausgelegt, anhand mindestens eines bereitgestellten Signals 22 zu ermitteln oder zu erkennen, ob der Bremskraftverstärker 14 des Bremssystems in mindestens einem funktionseingeschränkten oder funktionsunfähigen Zustand vorliegt. Sofern die Ansteuereinrichtung 18 ermittelt oder erkennt, dass der Bremskraftverstärker 14 in dem mindestens einen funktionseingeschränkten oder funktionsunfähigen Zustand vorliegt, ist unter Berücksichtigung mindestens einer bereitgestellten Vorgabegrösse 24 bezüglich eines von einem Fahrer des Fahrzeugs angeforderten Gesamt-Bremsmoments mittels der Ansteuereinrichtung 18 die Soll-Größe festlegbar. Danach ist die elektrische Parkbremse 12 mittels des Ansteuersignals 20 derart ansteuerbar, dass ein der festgelegten Soll-Größe entsprechendes Ist-Bremsmoment mittels der elektrischen Parkbremse 12 so ausübbar ist, dass das Fahrzeug zumindest mittels des Ist-Bremsmoments abbremsbar ist.

Die Steuervorrichtung 10 kann somit eine Rückfallebene bei einem Vorliegen des Bremskraftverstärkers 14 in dem mindestens einen funktionseingeschränkten oder funktionsunfähigen Zustand gewährleisten, in welcher der Fahrer trotz der zumindest eingeschränkten Einsetzbarkeit des Bremskraftverstärkers 14 noch aufgrund der oben beschriebenen zusätzlichen Nutzung der elektrischen Parkbremse 12 beim Abbremsen des Fahrzeugs kraftmäßig unterstützbar ist. Die vom Fahrer zum Aufbauen eines Bremsmoments in mindestens einem Radbremszylinder 26 aufzubringende Fahrerbremskraft Ff ist deshalb mittels der zusätzlichen Nutzung der elektrischen Parkbremse 12 gegenüber einer zum unverstärkten Aufbau des gleichen Bremsmoments notwendigen Fahrerbremskraft Ff reduzierbar. Man kann dies auch als ein Einsetzen der von der Steuervorrichtung 10 angesteuerten elektrischen Parkbremse 12 zur Reduzierung der zum Abbremsen des Fahrzeugs notwendigen Fahrerbremskraft Ff umschreiben.

Insbesondere kann die elektrische Parkbremse 12 mittels der Steuervorrichtung 10 so ansteuerbar sein, dass selbst bei einem Totalausfall des Bremskraftverstärkers 14 eine vom Fahrer angeforderte Verzögerung noch mit der gleichen Fahrerbremskraft Ff wie bei einem voll-funktionsfähigen Bremskraftverstärkter 14 bewirkbar ist. Mittels der Steuervorrichtung 10 ist somit eine Funktionsbeeinträchtigung oder ein Ausfall des Bremskraftverstärkers 14 kompensierbar. Selbst eine relativ hohe Verzögerung kann in diesem Fall noch mit einem gleichbleibenden und relativ geringen Kraftaufwand erfüllbar sein.

Der Bremskraftverstärkter 14 kann z.B. ein elektromechanischer Bremskraftverstärker 14 sein. Es wird jedoch darauf hingewiesen, dass die Steuervorrichtung 10 eine Funktionsbeeinträchtigung oder einen Ausfall einer Vielzahl verschiedener Typen des Bremskraftverstärkers 14 zumindest zeitweise durch das Ansteuern/Aktivieren der elektrischen Parkbremse 12 überbrücken kann. Die Einsetzbarkeit der Steuervorrichtung 10 ist somit nicht auf einen bestimmten Typ des Bremskraftverstärkers 14 des Bremssystems limitiert.

Die Ansteuereinrichtung 18 ist dazu ausgelegt, anhand mindestens eines von mindestens einem fahrzeugeigenen Sensor als das mindestens eine Signal 22 bereitgestellten Sensorsignals 22 zu ermitteln, ob der Bremskraftverstärker 14 in dem mindestens einen funktionseingeschränkten oder funktionsunfähigen Zustand vorliegt. Somit wird die Überwachung des Bremskraftverstärkers 14 auch von der Ansteuereinrichtung 18 ausgeführt. Die Ansteuereinrichtung 18 kann somit zusätzlich dazu genützt werden, eine andernfalls getrennt dazu ausgebildete Überwachungsvorrichtung des Bremskraftverstärkers 14 zu ersetzen.

In der Ausführungsform der Fig. 1 ist die Ansteuereinrichtung 18 dazu ausgelegt, das mindestens eine von mindestens einem Drucksensor als den mindestens einen (nicht dargestellten) fahrzeugeigenen Sensor bereitgestellte Sensorsignal 22 mit der mindestens einen Vorgabegröße 24 und/oder mit mindestens einem aus der mindestens einen Vorgabegröße 24 hergeleiteten Soll-Drucksignal zu vergleichen. Das mindestens eine zum Vergleich herangezogene Sensorsignal 22 kann somit insbesondere einen in mindestens einer Leitung 28 des Bremssystems, in einem Hauptbremszylinder 30 des Bremssystems und/oder in dem mindestens einen Radbremszylinder 26 vorliegenden Druck beinhalten. Beispielsweise kann das mindestens eine Sensorsignal 22 einen Hauptbremszylinderinnendruck, einen Vordruck, einen Radbremszylinderdruck und/oder eine entsprechende Größe umfassen. Vor allem ein in einem Bremssattel angeordneter Drucksensor kann zum Bereitstellen des mindestens einen Sensorsignals 22 genutzt werden.

Die mindestens eine Vorgabegröße 24 kann mittels eines Bremsbetätigungselement-Sensors 32, wie beispielsweise eines Pedalwegsensors/Pedalweggebers 32, an die Steuervorrichtung 10 bereitstellbar sein. Somit ist mittels einer derartigen Auslegung der Steuervorrichtung 10 auch ein Bremsbetätigungselement-Sensor 32, welcher zwischen einem Bremsbetätigungselement 34 (wie beispielsweise einem Bremspedal) und dem Bremskraftverstärker 14, bzw. dem Hauptbremszylinder 30, angeordnet sein kann, mit einer gesteigerten Multifunktionalität einsetzbar.

Bei der Ausführungsform der Fig. 1 ist die Ansteuereinrichtung 18 dazu ausgelegt, anhand des Vergleichs (des mindestens einen Sensorsignals 22 mit der mindestens einen Vorgabegröße 24 und/oder mit dem mindestens einen daraus hergeleiteten Soll-Drucksignal) zu ermitteln, ob der Bremskraftverstärker 14 in dem mindestens einen funktionseingeschränkten oder funktionsunfähigen Zustand vorliegt. Auf diese Weise ist selbst eine leicht eingeschränkte Funktionsfähigkeit des Bremskraftverstärkers 14 verlässlich und mit einer hohen Genauigkeit erkennbar.

Fig. 1 zeigt als hydraulische Komponenten des mit der Steuervorrichtung 10 ausgestatteten Bremssystems lediglich einen Radbremszylinder 26, den Hauptbremszylinder 30, eine zwischen dem Hauptbremszylinder 30 und dem Radbremszylinder 26 verlaufende Leitung 28 und ein Bremsflüssigkeitsreservoir 36. Das mit der Steuervorrichtung 10 zusammenwirkende Bremssystem kann jedoch auch noch andere hydraulische Komponenten aufweisen. Insbesondere kann das Bremssystem eine Vielzahl verschiedener Bremskreise haben, ohne dass sie die Einsetzbarkeit der Steuervorrichtung 10 beeinträchtigt. Des Weiteren kann das Bremssystem mindestens eine elektrische Komponente, wie z.B. einen (nicht skizzierten) Generator zum Aufladen der Batterie 38, umfassen.

Für eine bessere Fahrzeugstabilität kann die elektrische Parkbremse 12 an den Rädern der Vorderachse angeordnet sein. Ein Nutzen der elektrischen Parkbremse 12 an den Rädern der Hinterachse ist jedoch nicht ausgeschlossen.

Bevorzugter Weise ist die elektrische Parkbremse 12 als autoelektrischer Parkbremssattel (autoelektrische Parkbremse, APD) ausgebildet. Insbesondere kann die elektrische Parkbremse 12 einen Stift/Steller umfassen, welcher derart auf einen Bremsbelag drückbar ist, dass das dem festgelegten Soll-Bremsmoment entsprechende Ist-Bremsmoment auf ein zugeordnetes Rad 40 ausübbar ist. Der Stift/Steller der elektrischen Parkbremse 12 kann somit zum Realisieren einer Rückfallebene, bzw. einer "modifizierten Bremskraftverstärkung", genützt werden.

Bereits kostengünstige Bremssättel sind häufig so ausgeführt, dass ein Stift/Steller auf den Kolbenboden und damit auf den Bremsbetrag drückt. Die auf diese Weise zusätzlich mittels der elektrischen Parkbremse 12 bereitgestellte Bremskraft kann vorteilhaft mit einer hydraulisch übertragenen (aber durch die Funktionsbeeinträchtigung oder den Ausfall des Bremskraftverstärkers 14 nur unverstärkten) Kraft überlagert werden. Auf diese Weise sind selbst bei einem Ausfall des Bremskraftverstärkers 14 höhere Verzögerungen erreichbar. Eine Weiterbildung sieht den Verbau eines Drucksensors im Sattel der elektrischen Parkbremse 12 vor.

Die oben ausgeführten Vorteile sind auch bei einer die Steuervorrichtung 10 umfassenden elektrischen Parkbremse 12 und/oder bei einem Bremssystem für ein Fahrzeug mit der elektrischen Parkbremse 12, dem Bremskraftverstärker 14 und der Steuervorrichtung 10 gewährleistet. Auch bei einem derartigen Bremssystem kann die elektrische Parkbremse als autoelektrischer Parkbremssattel ausgebildet sein.

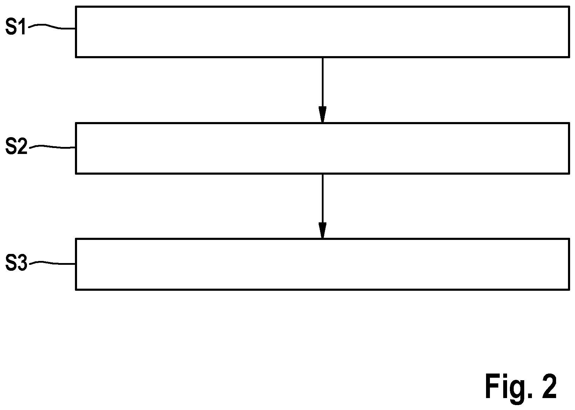

Fig. 2 zeigt ein Flussdiagramm zum Erläutern einer Ausführungsform des Verfahrens zum Betreiben eines Bremssystems eines Fahrzeugs mit einem Bremskraftverstärker und einer elektrischen Parkbremse.

Das nachfolgend ausgeführte Verfahren kann beispielsweise mittels der oben erläuterten Steuervorrichtung ausgeführt werden. Die Ausführbarkeit des Verfahrens ist jedoch nicht auf den Einsatz einer derartigen Steuervorrichtung limitiert.

In einem Verfahrensschritt S1 wird ermittelt, ob der Bremskraftverstärker in mindestens einem funktionseingeschränkten oder funktionsunfähigen Zustand vorliegt. Insbesondere wird das Vorliegen des Bremskraftverstärkers in dem mindestens einen funktionseingeschränkten oder funktionsunfähigen Zustand ermittelt, indem mindestens eine in mindestens einem hydraulisches Bremssystems ermittelte Druckgröße mit mindestens einer Vorgabegröße bezüglich eines von einem Fahrer des Fahrzeugs angeforderten Gesamt-Bremsmoments und/oder mit mindestens einer aus der mindestens einen Vorgabegröße hergeleiteten Soll-Druckgröße verglichen wird. Beispiele für die mindestens eine Vorgabegröße und die mindestens eine Druckgröße sind oben genannt.

Die weiteren Verfahrensschritte S2 und S3 werden ausgeführt, sofern ermittelt wird, dass der Bremskraftverstärker in dem mindestens einen funktionseingeschränkten oder funktionsunfähigen Zustand vorliegt. In dem Verfahrensschritt S2 wird eine Soll-Größe bezüglich eines mittels der elektrischen Parkbremse zum Abbremsen des Fahrzeugs aufzubringenden Soll-Bremsmoments festgelegt. Das Festlegen der Soll-Größe erfolgt unter Berücksichtigung der mindestens einen Vorgabegröße bezüglich des von dem Fahrer angeforderten Gesamt-Bremsmoments.

In dem Verfahrensschritt S3 wird die elektrische Parkbremse derart angesteuert, dass mittels der elektrischen Parkbremse ein der festgelegten Soll-Größe entsprechendes Ist-Bremsmoment zum Abbremsen des Fahrzeugs ausgeübt wird. Auch mittels des Verfahrens können eine Funktionsbeeinträchtigung oder ein Totalausfall des Bremskraftverstärkers zumindest zweitweise überbrückt werden. Das Verfahren liefert damit die oben schon beschriebenen Vorteile.

## Patentansprüche

1. Steuervorrichtung (10) für zumindest eine elektrische Parkbremse (12) eines Bremssystems eines Fahrzeugs mit:
einer Ansteuereinrichtung (18), mittels welcher eine Soll-Größe bezüglich eines mittels der elektrischen Parkbremse (12) aufzubringenden Soll-Bremsmoments festlegbar und ein der festgelegten Soll-Größe entsprechendes Ansteuersignal (20) an die elektrische Parkbremse (12) ausgebbar ist;
wobei die Ansteuereinrichtung (18) dazu ausgelegt ist, zu erkennen, ob ein Bremskraftverstärker (14) des Bremssystems in mindestens einem funktionseingeschränkten oder funktionsunfähigen Zustand vorliegt, und, gegebenenfalls, unter Berücksichtigung mindestens einer bereitgestellten Vorgabegröße (24) bezüglich eines von einem Fahrer des Fahrzeugs angeforderten Gesamt-Bremsmoments die Soll-Größe festzulegen und die elektrische Parkbremse (12) mittels des Ansteuersignals (20) derart anzusteuern, dass ein der festgelegten Soll-Größe entsprechendes Ist-Bremsmoments mittels der elektrischen Parkbremse (12) so ausübbar ist, dass das Fahrzeug zumindest mittels des Ist-Bremsmoments abbremsbar ist;
**dadurch gekennzeichnet, dass**
die Ansteuereinrichtung (18) dazu ausgelegt ist, zu ermitteln, ob der Bremskraftverstärker (14) in dem mindestens einen funktionseingeschränkten oder funktionsunfähigen Zustand vorliegt, indem mindestens eine von mindestens einem fahrzeugeigenen Drucksensor in mindestens einer Hydraulik des Bremssystems ermittelte Druckgröße mit der mindestens einen Vorgabegröße (24) und/oder mit mindestens einer aus der mindestens einen Vorgabegröße (24) hergeleiteten Soll-Druckgröße verglichen wird.

2. Elektrische Parkbremse (12) für ein Bremssystems eines Fahrzeugs mit einer Steuervorrichtung (10) nach Anspruch 1.

3. Elektrische Parkbremse (12) nach Anspruch 2, wobei die elektrische Parkbremse (12) als autoelektrischer Parkbremssattel ausgebildet ist.

4. Elektrische Parkbremse (12) nach Anspruch 3, wobei die elektrische Parkbremse (12) einen Stift umfasst, welcher derart auf einen Bremsbelag drückbar ist, dass das dem festgelegten Soll-Bremsmoment entsprechende Ist-Bremsmoment auf ein zugeordnetes Rad (40) ausübbar ist.

5. Bremssystem für ein Fahrzeug mit einer elektrischen Parkbremse (12), einem Bremskraftverstärker (14) und einer Steuervorrichtung (10) nach Anspruch 1.

6. Bremssystem nach Anspruch 5, wobei die elektrische Parkbremse (12) als autoelektrischer Parkbremssattel ausgebildet ist.

7. Verfahren zum Betreiben eines Bremssystems eines Fahrzeugs mit einem Bremskraftverstärker (14) und einer elektrischen Parkbremse (12) mit den Schritten:
Ermitteln, ob der Bremskraftverstärker (14) in mindestens einem funktionseingeschränkten oder funktionsunfähigen Zustand vorliegt (S1);
sofern ermittelt wird, dass der Bremskraftverstärker (14) in dem mindestens einen funktionseingeschränkten oder funktionsunfähigen Zustand vorliegt, Festlegen einer Soll-Größe bezüglich eines mittels der elektrischen Parkbremse (12) zum Abbremsens des Fahrzeugs aufzubringenden Soll-Bremsmoments unter Berücksichtigung mindestens einer Vorgabegröße (24) bezüglich eines von einem Fahrer des Fahrzeugs angeforderten Gesamt-Bremsmoments (S2);
und
Ansteuern der elektrischen Parkbremse (12) derart, dass mittels der elektrischen Parkbremse (12) ein der festgelegten Soll-Größe entsprechendes Ist-Bremsmoment zum Abbremsen des Fahrzeugs ausgeübt wird,
**dadurch gekennzeichnet, dass**
ermittelt wird, ob der Bremskraftverstärker (14) in dem mindestens einen funktionseingeschränkten oder funktionsunfähigen Zustand vorliegt, indem mindestens eine in mindestens einer Hydraulik des Bremssystems ermittelte Druckgröße mit der mindestens einen Vorgabegröße (24) und/oder mit mindestens einer aus der mindestens einen Vorgabegröße (24) hergeleiteten Soll-Druckgröße verglichen wird.

## Claims

1. Control device (10) for at least one electric parking brake (12) of a brake system of a vehicle, having:
an actuation device (18) by means of which a setpoint variable relating to a setpoint braking torque which is to be applied by means of the electric parking brake (12) can be defined, and an actuation signal (20) which corresponds to the defined setpoint variable can be output to the electric parking brake (12);
wherein the actuation device (18) is configured to detect whether a brake booster (14) of the brake system is present in at least a functionally restricting or functionally incapable state, and to define the setpoint variable, if appropriate, taking into account at least one supplied predefined variable (24) relating to an overall braking torque requested by a driver of the vehicle, and to actuate the electric parking brake (12) by means of the actuation signal (20) in such a way that an actual braking torque which corresponds to the defined setpoint variable can be applied by means of the electric parking brake (12) in such a way that the vehicle can be braked at least by means of the actual braking torque;
**characterized in that**
the actuation device (18) is configured to determine whether the brake booster (14) is present in the at least one functionally restricting or functionally incapable state in which at least one pressure variable which is determined by at least one vehicle-specific pressure sensor in at least one hydraulic system of the brake system is compared with the at least one predefined variable (24) and/or with at least one setpoint pressure variable which is derived from the at least one predefined variable (24).

2. Electric parking brake (12) for a brake system of a vehicle having a control device (10) according to Claim 1.

3. Electric parking brake (12) according to Claim 2, wherein the electric parking brake (12) is embodied as an automotive electric parking brake calliper.

4. Electric parking brake (12) according to Claim 3, wherein the electric parking brake (12) comprises a pin which can be pressed on a brake lining in such a way the actual braking torque which corresponds to the defined setpoint braking torque can be applied to an assigned wheel (40).

5. Brake system for a vehicle having an electric parking brake (12), a brake booster (14) and a control device (10) according to Claim 1.

6. Brake system according to Claim 5, wherein the electric parking brake (12) is embodied as an automotive electric parking brake calliper.

7. Method for operating a brake system of a vehicle having a brake booster (14) and an electric parking brake (12) comprising the steps:
Determining whether the brake booster (14) is present in at least one functionally restricting or functionally incapable state (S1);
in so far it is determined that the brake booster (14) is present in the at least one functionally restricting or functionally incapable state, defining a setpoint variable relating to a setpoint braking torque to be applied by means of the electric parking brake (12) for braking the vehicle, taking into account at least one predefined variable (24) relating to an overall braking torque (S2) requested by a driver of the vehicle; and
actuating the electric parking brake (12) in such a way that an actual braking torque which corresponds to the defined setpoint variable and has the purpose of braking the vehicle is applied by means of the electric parking brake (12),
**characterized in that**
it is determined whether the brake booster (14) is present in the at least one functionally restricting or functionally incapable state in which at least one pressure variable which is determined in at least one hydraulic system of the brake system is compared with the at least one predefined variable (24) and/or with at least one setpoint pressure variable which is derived from the at least one predefined variable (24).

## Revendications

1. Dispositif de commande (10) pour au moins un frein de stationnement électrique (12) d'un système de freinage d'un véhicule, comprenant :
un appareil de commande (18) au moyen duquel peut être définie une grandeur de consigne concernant un moment de freinage de consigne à appliquer au moyen du frein de stationnement électrique (12) et peut être délivré au frein de stationnement électrique (12) un signal de commande (20) correspondant à la grandeur de consigne définie ;
l'appareil de commande (18) étant conçu pour reconnaître si un servofrein (14) du système de freinage se trouve dans au moins un état de restriction du fonctionnement ou d'incapacité de fonctionnement et, le cas échéant, en tenant compte d'au moins une grandeur préréglée (24) fournie concernant un moment de freinage total exigé par un conducteur du véhicule, pour définir la grandeur de consigne et commander le frein de stationnement électrique (12) au moyen du signal de commande (20) de telle sorte qu'un moment de freinage réel correspondant à la grandeur de consigne définie peut être exercé par le frein de stationnement électrique (12) de manière à ce que le véhicule puisse être freiné au moyen du moment de freinage réel ;
**caractérisé en ce que**
l'appareil de commande (18) est conçu pour déterminer si le servofrein (14) se trouve dans l'au moins un état de restriction du fonctionnement ou d'incapacité de fonctionnement **en ce qu'**au moins une grandeur de pression, déterminée par au moins un capteur de pression propre au véhicule dans au moins un circuit hydraulique du système de freinage, est comparée avec l'au moins une grandeur préréglée (24) et/ou avec au moins une grandeur de pression de consigne dérivée de l'au moins une grandeur préréglée (24).

2. Frein de stationnement électrique (12) pour un système de freinage d'un véhicule comprenant un dispositif de commande (10) selon la revendication 1.

3. Frein de stationnement électrique (12) selon la revendication 2, le frein de stationnement électrique (12) étant réalisé sous la forme d'un étrier de frein de stationnement électrique automatique.

4. Frein de stationnement électrique (12) selon la revendication 3, le frein de stationnement électrique (12) comprenant une broche qui peut être poussée sur une garniture de frein de telle sorte que le moment de freinage réel correspondant au moment de freinage de consigne peut être exercé sur une roue (40) associée.

5. Système de freinage pour un véhicule équipé d'un frein de stationnement électrique (12), un servofrein (14) et un dispositif de commande selon la revendication 1.

6. Système de freinage selon la revendication 5, le frein de stationnement électrique (12) étant réalisé sous la forme d'un étrier de frein de stationnement électrique automatique.

7. Procédé pour faire fonctionner un système de freinage pour un véhicule équipé d'un servofrein (14) et un frein de stationnement électrique (12), comprenant les étapes suivantes :
détermination si le servofrein (14) se trouve dans au moins un état de restriction du fonctionnement ou d'incapacité de fonctionnement (S1) ;
s'il est déterminé que le servofrein (14) se trouve dans l'au moins un état de restriction du fonctionnement ou d'incapacité de fonctionnement, définition d'une grandeur de consigne concernant un moment de freinage de consigne à appliquer au moyen du frein de stationnement électrique (12) en vue de freiner le véhicule en tenant compte d'au moins une grandeur préréglée (24) concernant un moment de freinage total exigé par un conducteur du véhicule (S2) ;
et
commande du frein de stationnement électrique (12) de telle sorte qu'un moment de freinage réel correspondant à la grandeur de consigne définie peut être exercé par le frein de stationnement électrique (12) en vue de freiner le véhicule ;
**caractérisé en ce que**
il est déterminé si le servofrein (14) se trouve dans l'au moins un état de restriction du fonctionnement ou d'incapacité de fonctionnement **en ce qu'**au moins une grandeur de pression, déterminée dans au moins un circuit hydraulique du système de freinage, est comparée avec l'au moins une grandeur préréglée (24) et/ou avec au moins une grandeur de pression de consigne dérivée de l'au moins une grandeur préréglée (24).
